# EUROPEAN PATENT SPECIFICATION

(11) **EP 2 907 363 B1**
(45) Date of publication and mention of the grant of the patent: **27.06.2018**
(21) Application number: 13773717.7
(22) Date of filing: 03.10.2013
(51) Int. Cl.: H05B 6/12, A47J 27/00

(54) **A WIRELESS COOKING APPLIANCE OPERATED ON AN INDUCTION HEATING COOKTOP**
AUF EINER INDUKTIONSHERDPLATTE BETRIEBENES DRAHTLOSES KÜCHENGERÄT
APPAREIL DE CUISSON SANS FIL FONCTIONNANT SUR UNE TABLE DE CUISSON À INDUCTION

(30) Priority: 11.10.2012 TR 201211692
(43) Date of publication of application: 19.08.2015
(73) Proprietor: Arçelik Anonim Sirketi, 34950 Istanbul (TR)
(72) Inventor: YAMAN, Onur, 34950 Istanbul (TR); HAZIR, Sefa, 34950 Istanbul (TR)
(86) International application number: PCT/EP2013/070641
(87) International publication number: WO 2014/056786

(56) References cited:
- WO-A1-2010/080738
- WO-A1-2013/007953
- DE-A1-102008 054 904
- DE-A1-102009 058 271

## Description

The present invention relates to a cooking appliance operated wirelessly on an induction heating cooktop and which is heated from its base.

The use of kitchen appliances that are operated with the principle of wireless power transmission on the induction heating cooktop is known. Control and communication units like the display, sensor, user interface, RFID, microcontroller are disposed on the wireless kitchen appliances that give "smart" features to these appliances, providing communication with the induction heating cooktop and furthermore providing the monitoring and regulation of the parameters like temperature and motor speed. Low level electrical power is required for energizing the control and communication units. This electrical power is supplied from the induction coil in the induction heating cooktop by means of a receiver coil. The energy required for the control and communication units of the heat controlled cooking appliances, used wirelessly on the induction heating cooktop and having a ferromagnetic base enabling the appliance to be heated from the bottom, is provided with a receiver coil disposed on the base of the cooking appliance and which receives magnetic energy from the induction coil. The receiver coil energizes the control and communication units by partially receiving energy from the induction coil and thus monitoring and adjustment operations can be performed on the cooking appliance. In order for the receiver coil to receive the desired amount of energy from the cooktop induction coil, the receiver coil has to be positioned oppositely (face to face) with the induction coil and near the induction coil. Therefore, the most suitable place for the receiver coil is the base of the cooking appliance that is seated on the induction heating cooktop. The receiver coil, being disposed between the cooktop induction coil and the base of the cooking appliance, partially hinders the energy transfer from the induction coil to the base and the cooking appliance cannot be heated at the power level adjusted by the user in the induction heating cooktop.

The International Patent Application No. WO9941950 relates to a cooking vessel that is used in induction heating cooktops.

The International Patent Application No. WO2010080738 relates to a smart cookware that is wirelessly operated with an inductive power supply.

The United States Patent No. US7355150 relates to a cooking appliance that is energized with non-contact power supply.

The aim of the present invention is the realization of a cooking appliance that is operated wirelessly on the induction heating cooktop, having a receiver coil disposed at its base and which is provided to be heated from its base according to the adjusted power level. The present invention provides a cooking appliance as disclosed in claim 1.

The cooking appliance (will be referred to as "appliance" hereinafter) realized in order to attain the aim of the present invention, explicated in the first claim and the respective claims thereof, is a heat controlled appliance like the pot, deep frying pan, soup maker, kettle, coffee machine, tea machine, rice cooker, pasta cooker, pot with a mixer motor, operated wirelessly on an induction heating cooktop (will be referred to as "cooktop" hereinafter).

A control unit is disposed in the appliance, having monitoring and communication means like the microcontroller, user interface, display, RFID and providing the controlling of operating parameters like temperature, motor speed and communication with the cooktop.

The appliance furthermore comprises a receiver coil, in planar spiral form and having one or more than one winding, wound having gaps therebetween, that partially receives the power generated by the induction coil in the induction heating cooktop whereon the appliance is operated and supplying the energy required for operating the control unit and other elements like the temperature sensor, motor, and furthermore comprises a coil casing having a spiral channel wherein the coil windings are embedded and produced from heat-resistant plastic material such as glass-reinforced polyamide, Teflon.

The gapped windings of the receiver coil are laid down in the channel formed on the upper surface of the coil casing in a form matching the form of the receiver coil. Thus, the receiver coil receives the energy required for the control unit or other electronic components, and does not hinder the transmission of the magnetic energy produced in the induction coil of the cooktop and heating the appliance.

In an embodiment of the present invention, the depth of the channel formed on the coil casing is increased and the windings of the receiver coil are provided to be entirely embedded in the channel. The uppermost portions of the channel contact the base of the appliance, but the windings do not contact the base.

In the present invention, a cover that covers the receiver coil and that prevents the receiver coil from contacting the base of the appliance is placed onto the coil casing.

In the present invention, the receiver coil comprises an outer winding terminal providing the electrical connection thereof with the control unit and extending outwards from the outermost winding, and furthermore an inner winding terminal extending from the innermost winding. The outer and inner winding terminals are passed through the slots on the coil casing and the cover to be placed to the contact extension, and connected to the cables coming from the control unit.

In the present invention, an intermediate insulating layer preventing the winding terminals from contacting each other and getting short circuited is placed between the coil casing and the cover.

In another embodiment of the present invention, the coil casing comprises a support ring that is situated on the surface thereof facing the base and that surrounds the cover seated thereon.

In another embodiment of the present invention, the coil casing is integrated to the base of the appliance together with the cover thereon, for example fixed by being adhered.

In another embodiment of the present invention, the appliance comprises a skirt extending below the level of the base thereof and having screw threads on its inner wall, and the coil casing is fixed to the inner wall of the skirt by being rotated by means of the screw threads on the outer surface of the support ring.

In an embodiment of the present invention, screw threads are provided all around the lower portion of the appliance body, and the coil casing is mounted to the appliance by being rotated by means of the screw threads on the inner surface of the support ring.

The receiver coil placed at the base of the appliance of the present invention and having spiral windings positioned in a gapped manner receives the energy from the induction coil, required for the control unit and other electronic components, but does not hinder the magnetic energy transmitted to the base of the appliance from the induction coil. The appliance is provided to be homogeneously heated in accordance with the power level (temperature setting) adjusted on the cooktop by the user.

The appliance realized in order to attain the aim of the present invention is illustrated in the attached figures, where:

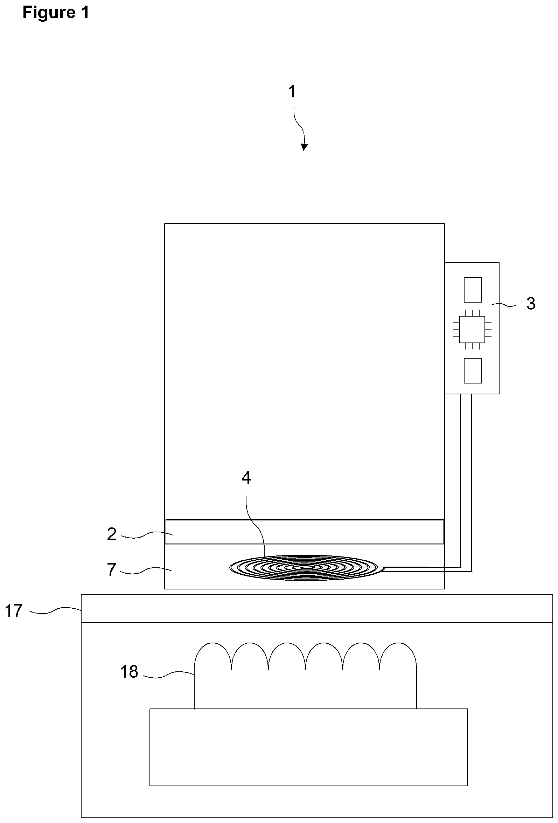

Figure 1 - is the schematic view of the appliance operated on an induction heating cooktop.
Figure 2 - is the top view of a receiver coil.
Figure 3 - is the top view of a coil casing.
Figure 4 - is the top view of a coil casing wherein the receiver coil is placed in an embodiment of the present invention.
Figure 5 - is the schematic exploded view of an appliance and the coil casing placed at the base thereof.
Figure 6 - is the schematic exploded view of the appliance, the cover and the coil casing placed on an induction heating cooktop.
Figure 7 - is the schematic view of an appliance at the base of which the coil casing is integrated in an embodiment of the present invention.
Figure 8 - is the schematic view of an appliance at the base of which the coil casing is integrated in another embodiment of the present invention.
Figure 9 - is the schematic view of an appliance at the base of which the coil casing is integrated in yet another embodiment of the present invention.

The elements illustrated in the figures are numbered as follows:
1. Appliance
2. Base
3. Control unit
4. Receiver coil
5. Winding
6. Channel
7. Coil casing
8. Cover
9. Outer winding terminal
10. Inner winding terminal
11. Lower slot
12. Upper slot
13. Contact extension
14. Intermediate insulating layer
15. Support ring
16. Skirt
17. Cooktop
18. Induction coil

The cooking appliance (1) (will be referred to as "appliance (1)" hereinafter) suitable to be operated wirelessly on an induction heating cooktop (17) (will be referred to as "cooktop (17)" hereinafter) having one or more than one induction coil (18), comprises a base (2) of ferromagnetic properties, enabling the appliance (1) to be heated from the bottom with the magnetic energy transferred by the induction coil (18), a control unit (3) having a microcontroller providing the controlling of the operating parameters like temperature, motor speed and communication with the cooktop (17) and the monitoring and communication means like the user interface, display, RFID, and a receiver coil (4) that partially receives the power generated by the induction coil (18), providing the required energy for operating the control unit (3) and/or the additional components (not shown in the figures) like the sensor, mixer motor mounted on the appliance (1) depending on the intended use.

The appliance (1) of the present invention comprises
- the receiver coil (4) having one or more than one winding (5) in planar spiral form, made of continuous copper conductive tracks, and
- a coil casing (7) produced from non-conductive and heat-resistant material, disposed between the base (2) and the cooktop (17) and having one or more than one channel (6) in planar spiral form, wherein the windings (5) are embedded.

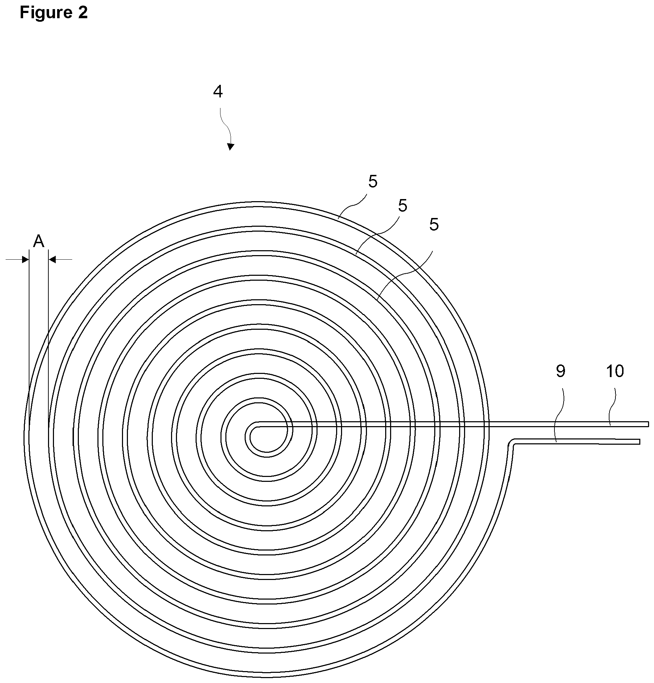

In an embodiment of the present invention, the channel (6) is formed on the surface of the coil casing (7) facing the base (2) so that gaps (A) remain between the windings (5) (Figure 2, Figure 3, Figure 5).

The receiver coil (4) provides low voltage, high frequency energy transmission from the induction coil (18) to the control unit (3) of the appliance (1) required for the electronic components like the microcontroller. The receiver coil (4) is also used for relatively higher level energy transmission with respect to the control unit (3), which is required for the mixer motor in appliances (1) having a mixer mechanism. The high level of magnetic energy required for heating the appliance (1) is provided directly from the induction coil (18) of the cooktop (17) by means of the ferromagnetic base (2). The receiver coil (4) is placed into the spiral channel (6) formed on the coil casing (7) with its windings (5) having gaps (A) therebetween so as not to hinder the magnetic energy transmitted from the induction coil (18) to the base (2). The magnetic energy generated in the induction coil (18) is transferred to the base (2) by passing through the gaps (A) between the windings (5) of the receiver coil (4) embedded in the coil casing (7). Thus, almost all of the magnetic energy generated by the induction coil (18) apart from the portion received by the receiver coil (4) is transmitted to the base (2) and the appliance (1) is provided to be effectively heated without being affected by the receiver coil (4). The coil casing (7) is produced from high temperature resistant plastic, also called engineering plastic, such as fiberglass - woven glass reinforced polyamide, Teflon, etc. and is not affected by high temperatures at the base (2).

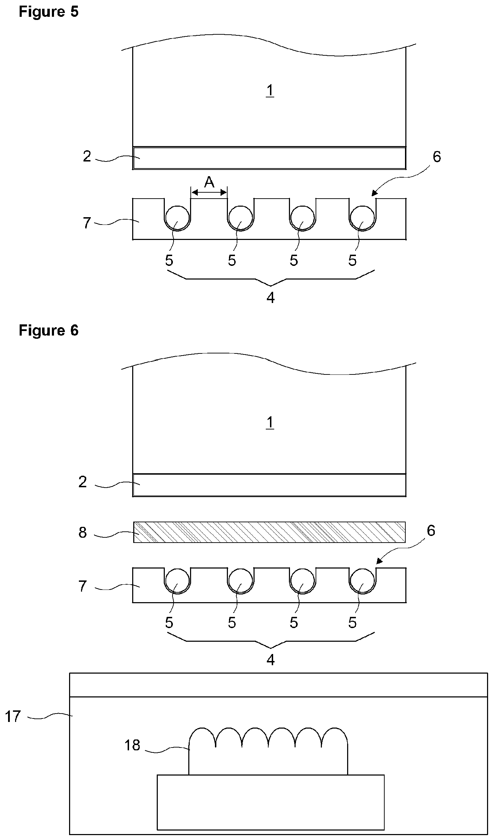

In an embodiment of the present invention, the coil casing (7) has the channel (6) deep enough for the windings (5) to be completely embedded therein so that the upper surfaces of the windings (5) do not contact the base (2) (Figure 5). The depth of the channel (6) is larger than the diameter or thickness of the winding wire or winding wires forming the windings (5), thus the uppermost portions of the channel (6) contact the base (2), but the windings (5) do not contact the base (2), thus, preventing the receiver coil (4) from getting short circuited.

In another embodiment of the present invention, the appliance (1) comprises a cover (8) placed onto the coil casing (7), produced from non-conductive and heat-resistant material and preventing the windings (5) of the receiver coil (4) embedded into the channel (6) from contacting the base (2) by covering thereover. In this embodiment, the coil casing (7), the receiver coil (4), the cover (8) and the base (2) are arranged in that order from bottom upwards on the cooktop (17); and the coil casing (7) contacts the upper base of the cooktop (17) and the cover (8) contacts the base (2) (Figure 6).

In another embodiment of the present invention, the receiver coil (4) comprises an outer winding terminal (9) providing the electrical connection thereof with the control unit (3) and extending outwards from the outermost winding (5), and furthermore an inner winding terminal (10) extending from the innermost winding (5) (Figure 2).

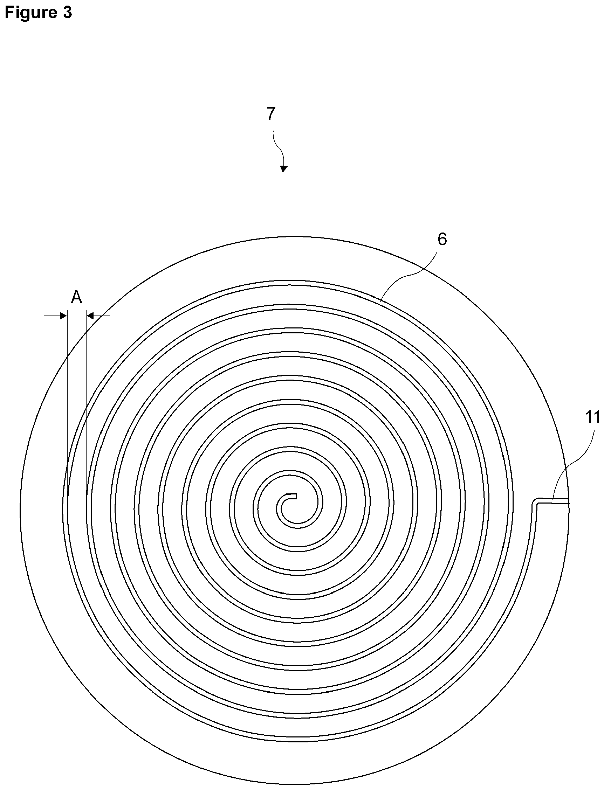

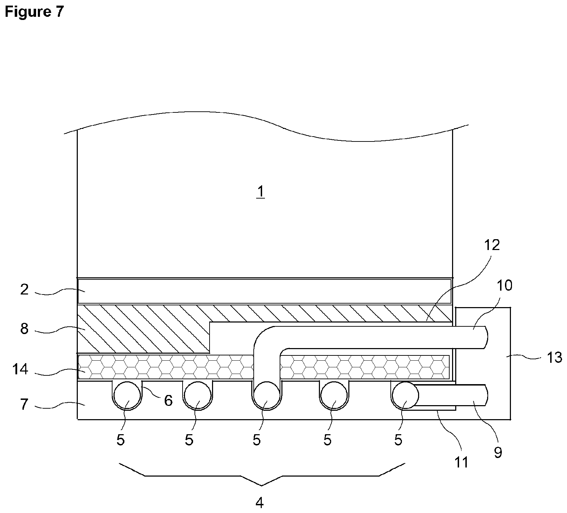

In another embodiment of the present invention, the coil casing (7) comprises a lower slot (11) extending from the outer end of the channel (6) to the edge, wherein the outer winding terminal (9) is placed (Figure 3, Figure 7).

In another embodiment of the present invention, the cover (8) comprises an upper slot (12) extending from the center thereof to the edge, wherein the inner winding terminal (10) is placed (Figure 7).

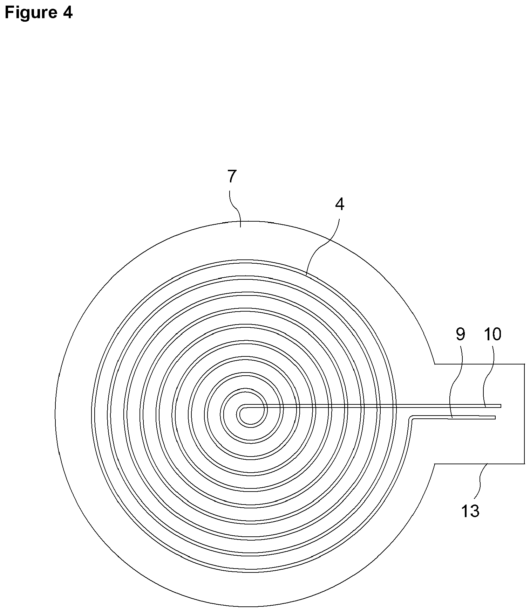

In another embodiment of the present invention, the coil casing (7) comprises a contact extension (13) situated at the edge thereof, whereon the connection elements like the contact pad and/or the connector are placed, that provide the electrical connection of the outer and inner winding terminals (9, 10) to the control unit (3) (Figure 4, Figure 7).

The receiver coil (4) is placed into the channel (6) of the coil casing (7) by being embedded, and the outer winding terminal (9) is placed onto the contact extension (13) by being passed through the lower slot (11). The cover (8) is placed onto the coil casing (7), and the inner winding terminal (10) is placed onto the contact extension (13) by being passed through the upper slot (12) on the cover (8) (Figure 4, Figure 7). The outer and inner winding terminals (9, 10) coming from the receiver coil (4) are connected to the cables (not shown in the figures) coming from the control unit (3) by means of the electrical connection elements (not shown in the figures) like the connector, contact pad which are disposed on the contact extension (13).

In another embodiment of the present invention, the appliance (1) comprises an intermediate insulating layer (14) placed between the coil casing (7) and the cover (8) and preventing the inner winding terminal (10) from contacting the windings (5) of the receiver coil (4) and the outer winding terminal (9) and from getting short circuited (Figure 7).

In an embodiment of the present invention, the appliance (1) comprises the coil casing (7) that is integrated to the base (2) thereof.

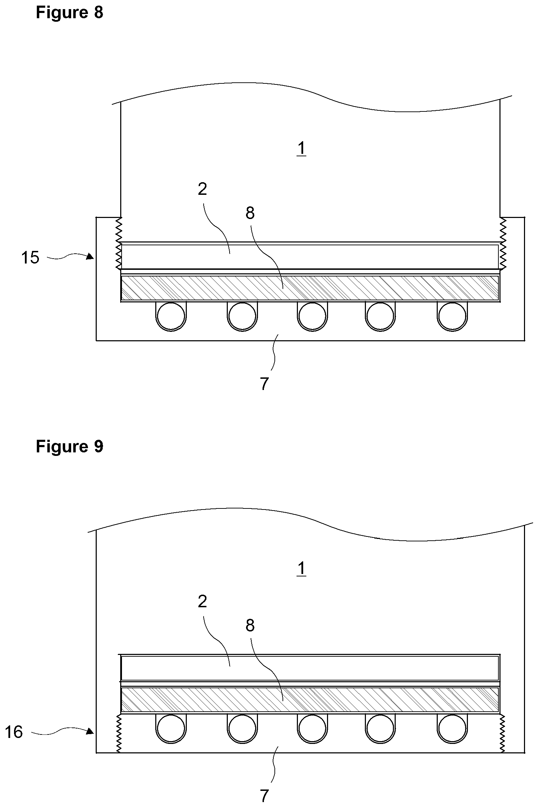

In another embodiment of the present invention, the coil casing (7) comprises a support ring (15) that is situated on the surface thereof facing the base (2) and that provides the cover (8) to be concentrically seated thereon by surrounding the cover (8) (Figure 8).

In another embodiment of the present invention, the appliance (1) comprises screw threads at the lower part of the body thereof, at its surface surrounding the base (2), and the coil casing (7) is fixed to the underside of the base (2) by being rotated by means of the screw threads on the inner surface of the support ring (15) (Figure 8).

In another embodiment of the present invention, the appliance (1) comprises a skirt (16) disposed at the lower part of the body thereof, extending below the level of the base (2), surrounding the base (2) and having screw threads on its inner wall, and the coil casing (7) is fixed to the underside of the base (2) by being screwed to the inner wall of the skirt (16) by means of the screw threads on the outer surface of the support ring (15) (Figure 9).

In another embodiment of the present invention, the coil casing (7) is fixed to the underside of the base (2) by being adhered.

The appliance (1) is a heat controlled cooker that requires heating from the base (2) like the pot, deep frying pan, soup maker, kettle, coffee machine, tea machine, rice cooker, pasta cooker, pot with mixer motor, etc.

By means of the receiver coil (4) having the spiral windings (5) with gaps (A) therebetween and placed into the channel (6) on the coil casing (7) by being embedded, losses in the magnetic energy transmitted by the induction coil (18) to the base (2) of the appliance (1) are decreased in the heat controlled cooking appliance (1) operated wirelessly on the induction heating cooktop (17) and requiring heating from the bottom. The appliance (1) is provided to be heated from the base (2) effectively and homogeneously in all power level settings whereat the cooktop (17) is operated.

## Claims

1. An appliance (1) suitable to be operated wirelessly on an induction heating cooktop (17) that has one or more than one induction coil (18), comprising a base (2) of ferromagnetic properties, enabling the appliance (1) to be heated from the bottom with the magnetic energy transferred by the induction coil (18), a control unit (3) having a microcontroller providing the controlling of the operating parameters like temperature, motor speed and communication with the cooktop (17) and the monitoring and communication means like the user interface, display, RFID, and
a receiver coil (4) that partially receives the power generated by the induction coil (18), providing the required energy for operating the control unit (3),
- the receiver coil (4) having more than one winding (5) in planar spiral form, made of continuous copper conductive tracks;
- a coil casing (7) produced from non-conductive and heat-resistant material, disposed between the base (2) and the cooktop (17) and having more than one channel (6) in planar spiral form, wherein the windings (5) are embedded;
- a cover (8) placed onto the coil casing (7), produced from non-conductive and heat-resistant material and preventing the windings (5) of the receiver coil (4) embedded into the channel (6) from contacting the base (2) by covering thereover;
- the receiver coil (4) comprising an outer winding terminal (9) providing the electrical connection thereof with the control unit (3) and extending outwards from the outermost winding (5), and furthermore an inner winding terminal (10) extending from the innermost winding (5), **characterized by**
- the cover (8) comprising an upper slot (12) extending from the center thereof to the edge, wherein the inner winding terminal (10) is placed;
- an intermediate insulating layer (14) that is disposed between the coil casing (7) and the cover (8).

2. An appliance (1) as in Claim 1, **characterized by** the coil casing (7) having the channel (6) formed on the surface thereof facing the base (2) so that gaps (A) remain between the windings (5).

3. An appliance (1) as in Claim 1 or 2, **characterized by** the coil casing (7) having the channel (6) deep enough for the windings (5) to be completely embedded therein so that the upper surfaces of the windings (5) do not contact the base (2).

4. An appliance (1) as in any one of the above claims, **characterized by** the coil casing (7) comprising a lower slot (11) extending from the outer end of the channel (6) to the edge, wherein the outer winding terminal (9) is placed.

5. An appliance (1) as in any one of the above claims, **characterized by** the coil casing (7) comprising a contact extension (13) that provides the electrical connection of the outer and inner winding terminals (9, 10) to the control unit (3).

6. An appliance (1) as in any one of the above claims, **characterized in that** the coil casing (7) is integrated with the base (2).

7. An appliance (1) as in Claim 1 to 6, **characterized by** the coil casing (7) comprising a support ring (15) that is situated at the surface thereof facing the base (2) and that surrounds all around the cover (8).

8. An appliance (1) as in Claim 7, **characterized in that** the coil casing (7) is fixed to the underside of the base (2) by being rotated by means of the screw threads on the inner surface of the support ring (15) and screw threads at the lower part of the body thereof, at its surface surrounding the base (2).

9. An appliance (1) as in Claim 7, **characterized by** a skirt (16) extending below the level of the base (2), surrounding the base (2) and having screw threads on its inner wall, and in that the coil casing (7) that is fixed to the underside of the base (2) by being screwed to the inner wall of the skirt (16) by means of the screw threads on the outer surface of the support ring (15).

10. An appliance (1) as in Claim 6, **characterized in that** the coil casing (7) is fixed to the underside of the base (2) by being adhered.

11. An appliance (1) as in any one of the above claims, which is a heat controlled cooker that requires to be heated from the base (2) like the pot, deep frying pan, soup maker, kettle, coffee machine, tea machine, rice cooker, pasta cooker, or pot with mixer motor, etc.

## Patentansprüche

1. Vorrichtung (1), die dazu geeignet ist, drahtlos auf einem Induktionsheizkochfeld (17) betrieben zu werden, das eine oder mehr als eine Induktionsspule (18) aufweist, umfassend
eine Basis (2) mit ferromagnetischen Eigenschaften, die es ermöglicht, die Vorrichtung (1) von unten mit der von der Induktionsspule (18) übertragenen magnetischen Energie zu erwärmen,
eine Steuereinheit (3) mit einem Mikrocontroller, der die Steuerung der Betriebsparameter wie Temperatur, Motordrehzahl und Kommunikation mit dem Kochfeld (17) und die Überwachungs- und Kommunikationsmittel wie die Benutzerschnittstelle, Anzeige, RFID und
eine Empfängerspule (4) die teilweise die von der Induktionsspule (18) erzeugte Energie aufnimmt, und die zum Betrieb der Steuereinheit (3) erforderliche Energie bereitstellt,
- die Empfängerspule (4) mit mehr als einer Wicklung (5) in planarer Spiralform aus durchgehenden Kupferleiterbahnen;
- eine aus nichtleitfähigem und wärmebeständigem Material hergestelltes Spulengehäuse (7), das zwischen der Basis (2) und dem Kochfeld (17) angeordnet ist und mehr als einen Kanal (6) in planarer Spiralform aufweist, worin die Wicklungen (5) eingebettet sind ;
- eine Abdeckung (8), die auf das Spulengehäuse (7) aufgesetzt ist, und aus nichtleitfähigem und wärmebeständigem Material hergestellt ist und die verhindert, dass die in den Kanal (6) eingebetteten Wicklungen (5) der Empfängerspule (4) die Basis (2) berühren, indem sie sie darüber bedeckt;
- Empfängerspule (4), die einen äußeren Wicklungsanschluss (9) umfasst, der die elektrische Verbindung deren mit der Steuereinheit (3) herstellt und sich von der äußersten Wicklung (5) nach außen erstreckt, und ferner einen inneren Wicklungsanschluss (10), der sich vom innersten Wicklung (5) erstreckt, **gekennzeichnet durch**
- die Abdeckung (8), die einen oberen Schlitz (12) aufweist, der sich von der Mitte dessen zu der Kante erstreckt, wobei der innere Wicklungsanschluss (10) platziert ist;
- eine isolierende Zwischenschicht (14), die zwischen dem Spulangehäuses (7) und der Abdeckung (8) angeordnet ist.

2. Vorrichtung (1) nach Anspruch 1, **dadurch gekennzeichnet dass,** das Spulengehäuse (7), das den Kanal (6) aufweist, der auf der Basis (2) zugewandten Oberfläche ausgebildet ist, sodass Zwischenräume (A) zwischen den Wicklungen (5) verbleiben.

3. Vorrichtung (1) nach Anspruch 1 oder 2, **dadurch gekennzeichnet, dass** das Spulengehäuse (7) den Kanal (6) tief genug hat, dass die Wicklungen (5) vollständig darin eingebettet sind, so dass die oberen Oberflächen der Wicklungen (5) die Basis (2) nicht berühren.

4. Vorrichtung (1) nach einem der vorhergehenden Ansprüche, **dadurch gekennzeichnet, dass** das Spulengehäuse (7) einen unteren Schlitz (11) aufweist, der sich vom äußeren Ende des Kanals (6) zum Rand erstreckt, wobei der äußere Wicklungsanschluss (9) platziert ist.

5. Vorrichtung (1) nach einem der vorhergehenden Ansprüche, **dadurch gekennzeichnet, dass** das Spulengehäuse (7) eine Kontaktverlängerung (13) aufweist, die die elektrische Verbindung der äußeren und inneren Wicklungsanschlüsse (9, 10) mit der Steuereinheit vorsieht (3).

6. Vorrichtung (1) nach einem der vorhergehenden Ansprüche, **dadurch gekennzeichnet, dass** das Spulengehäuse (7) in die Basis (2) integriert ist.

7. Vorrichtung (1) nach Anspruch 1 bis 6, **dadurch gekennzeichnet, dass** das Spulengehäuse (7) einen Stützring (15) aufweist, der an der Basis (2) zugewandten Oberfläche angeordnet ist und den gesamten Abdeckung (8) umgibt.

8. Vorrichtung (1) nach Anspruch 7, **dadurch gekennzeichnet, dass** das Spulengehäuse (7) an der Unterseite der Basis (2) befestigt ist, indem es mittels der Schraubengewinde an der Innenfläche des Stützrings (15) und Schraubengewinde an dem unteren Teil dessen Körpers rotiert wird, an der Oberfläche, der die Basis (2) umgibt.

9. Vorrichtung (1) nach Anspruch 7, **gekennzeichnet durch** eine Schürze (16), die sich unterhalb der Höhe der Basis (2) erstreckt, die Basis (2) umgibt und Schraubgewinde an ihrer Innenwand aufweist, und **dadurch, dass** das Spulengehäuse (7), der an der Unterseite der Basis (2) befestigt ist, indem er mit der Innenwand der Schürze (16) mittels der Schraubengewinde an der Außenfläche des Stützrings (15) verschraubt wird;

10. Vorrichtung (1) nach Anspruch 6, **dadurch gekennzeichnet, dass** das Spulengehäuse (7) an der Unterseite der Basis (2) durch Ankleben befestigt ist.

11. Vorrichtung (1) nach einem der vorangehenden Ansprüche, die ein wärmekontrollierter Kocher ist, der von der Basis (2) wie der Topf, die tiefe Bratpfanne, der Suppenbereiter, der Wasserkocher, die Kaffeemaschine, die Teemaschine, Reiskocher, Nudelkocher oder Topf mit Mischermotor usw. erhitzt werden muss.

## Revendications

1. Appareil (1) pouvant fonctionner sans fil sur une table de cuisson à chauffage par induction (17) comportant une ou plusieurs bobines d'induction (18), comprenant
une base (2) de propriétés ferromagnétiques, permettant de chauffer l'appareil (1) par le bas avec l'énergie magnétique transférée par la bobine d'induction (18),
une unité de commande (3) ayant un microcontrôleur permettant de contrôler les paramètres de fonctionnement comme la température, la vitesse du moteur et la communication avec la table de cuisson (17) et les moyens de surveillance et de communication comme l'interface utilisateur, l'affichage, la RFID et
une bobine de réception (4) qui reçoit partiellement la puissance générée par la bobine d'induction (18), fournissant l'énergie nécessaire pour faire fonctionner l'unité de commande (3),
- la bobine de réception (4) ayant plus d'un enroulement (5) en forme de spirale plane, constitué de pistes conductrices continues en cuivre;
- un boîtier de bobine (7) fabriquée en un matériau non conducteur et résistant à la chaleur, disposée entre la base (2) et la table de cuisson (17) et ayant plus d'un canal (6) en forme de spirale plane, dans lequel les enroulements (5) sont intégrés;
- un couvercle (8) placé sur le boîtier de bobine (7), fabriqué à partir d'un matériau non conducteur et résistant à la chaleur et empêchant les enroulements (5) de la bobine de réception (4) noyés dans le canal (6) de la base (2) en couvrant dessus;
- la bobine de réception (4) comprenant une borne d'enroulement externe (9) assurant sa connexion électrique avec l'unité de commande (3) et s'étendant vers l'extérieur depuis l'enroulement externe (5), et en outre une borne d'enroulement intérieure (10) enroulement (5), **caractérisé par**
- le couvercle (8) comprenant une fente supérieure (12) s'étendant depuis le centre de celui-ci jusqu'au bord, dans lequel la borne d'enroulement interne (10) est placée;
- une couche isolante intermédiaire (14) qui est disposée entre le boîtier de bobine (7) et le couvercle (8).

2. Appareil (1) selon la revendication 1, **caractérisé en ce que** le boîtier de bobine (7) présente le canal (6) est formé sur sa surface en regard de la base (2) de sorte que des intervalles (A) restent entre les enroulements (5).

3. Appareil (1) selon la revendication 1 ou 2, **caractérisé en ce que** le boîtier de bobine (7) présente le canal (6) suffisamment profond pour que les enroulements (5) y soient complètement noyés de sorte que les surfaces supérieures des enroulements (5) ne viennent pas en contact avec la base (2).

4. Appareil (1) selon l'une quelconque des revendications précédentes, **caractérisé en ce que** le boîtier de bobine (7) comprend une fente inférieure (11) s'étendant de l'extrémité externe du canal (6) jusqu'au bord, la borne d'enroulement extérieure (9) est placé.

5. Appareil (1) selon l'une quelconque des revendications précédentes, **caractérisé en ce que** le boîtier de bobine (7) comprend une extension de contact (13) qui assure la connexion électrique des bornes d'enroulement externe et interne (9, 10) à l'unité de commande (3).

6. Appareil (1) selon l'une quelconque des revendications précédentes, **caractérisé en ce que** le boîtier de bobine (7) est intégré à la base (2).

7. Appareil (1) selon les revendications 1 à 6, **caractérisé en ce que** le boîtier de bobine (7) comprend un anneau de support (15) situé à la surface de la base (2) et entourant tout autour du couvercle (8).

8. Appareil (1) selon la revendication 7, **caractérisé en ce que** le boîtier de bobine (7) est fixé sur la face inférieure de la base (2) par rotation des filetages sur la surface intérieure de l'anneau de support (15) et des filetages à la partie inférieure de son corps, à sa surface entourant la base (2).

9. Appareil (1) selon la revendication 7, **caractérisé en ce que** une jupe (16) s'étend au-dessous du niveau de la base (2), entourant la base (2) et ayant des filetages sur sa paroi interne, et **en ce que** le boîtier de bobine (7) est fixé sur la base (2) en étant vissé sur la paroi interne de la jupe (16) au moyen des filets de vis sur la surface extérieure de l'anneau de support (15).

10. Appareil (1) selon la revendication 6, **caractérisé en ce que** le boîtier de bobine (7) est fixé sur la face inférieure de la base (2) en étant collé.

11. Appareil (1) selon l'une quelconque des revendications précédentes, qui est une cuisinière à commande thermique qui nécessite d'être chauffée depuis la base (2) comme la marmite, la poêle à frire profonde, la soupe, la bouilloire, la cafetière, la théière, cuiseur de riz, cuiseur de pâtes, ou pot avec le moteur de mélangeur, etc.
